# EUROPEAN PATENT SPECIFICATION

(11) **EP 3 190 280 B1**
(45) Date of publication and mention of the grant of the patent: **14.11.2018**
(21) Application number: 17150027.5
(22) Date of filing: 02.01.2017
(51) Int. Cl.: F02B 37/00, F02B 37/013, F02B 37/12, F02B 27/02, F02D 41/22, F02B 29/04

(54) **CONTROL DEVICE FOR INTERNAL COMBUSTION ENGINE AND CONTROL METHOD THEREOF**
STEUERUNGSVORRICHTUNG FÜR EINEN VERBRENNUNGSMOTOR UND STEUERUNGSVERFAHREN DAFÜR
DISPOSITIF ET PROCÉDÉ DE COMMANDE D'UN MOTEUR À COMBUSTION INTERNE

(30) Priority: 08.01.2016 JP 2016002928
(43) Date of publication of application: 12.07.2017
(73) Proprietor: TOYOTA JIDOSHA KABUSHIKI KAISHA, Toyota-shi, Aichi-ken 471-8571 (JP)
(72) Inventor: SUZUKI, Ryo, Aichi-ken, 471-8571 (JP)
(74) Representative: TBK

(56) References cited:
- EP-A1- 2 333 275
- EP-A1- 2 375 035
- EP-A1- 2 489 851
- WO-A1-2009/023404
- JP-A- 2009 162 124
- US-A1- 2008 022 679
- US-A1- 2010 153 067

## Description

### BACKGROUND OF THE INVENTION

### 1. Field of the Invention

The present invention relates to a control device for controlling an internal combustion engine, and a control method thereof.

### 2. Description of Related Art

There has been known an internal combustion engine including two exhaust turbine superchargers. An internal combustion engine equipped with superchargers, disclosed in Japanese Patent Application Publication No. 2013-194541 (JP 2013-194541 A), for example, is configured such that a first supercharger and a second supercharger are disposed in series. More specifically, an intake passage is configured such that a first compressor of the first supercharger and a second compressor of the second supercharger are disposed in series so that the first compressor is placed on an upstream side relative to the second compressor, and an exhaust passage is configured such that a first turbine of the first supercharger and a second turbine of the second supercharger are disposed in series so that the second turbine is placed on the upstream side relative to the first turbine. Hereby, air supercharged by the first compressor can be further supercharged by the second compressor and supplied to a combustion chamber. Further, the internal combustion engine is configured such that: a compressor bypass passage for flowing the air by bypassing the second compressor is provided in the intake passage so as to control a working amount of the second supercharger; and a turbine bypass passage for flowing exhaust air by bypassing the second turbine is provided in the exhaust passage. A compressor bypass valve is provided in the compressor bypass passage and a turbine bypass valve is provided in the turbine bypass passage JP2009162124 discloses another example of a control device for controlling an internal combustion engine.

### SUMMARY OF THE INVENTION

In the meantime, in the internal combustion engine equipped with the superchargers, disclosed in JP 2013-194541 A, when a defect occurs in the compressor bypass valve and an opening degree of the valve cannot be decreased, a part of the intake passage on the upstream side relative to the second compressor and a part of the intake passage on a downstream side relative to the second compressor are maintained to communicate with each other through the compressor bypass passage. At this time, when the turbine bypass valve is controlled in a similar manner to a case where the compressor bypass valve works normally, the air might flow backward based on a difference in pressure between the part of the intake passage on the downstream side relative to the second compressor and the part thereof on the upstream side relative to the second compressor. That is, in a state where the compressor bypass passage cannot be closed, the opening degree of the turbine bypass valve is controlled to become small, so supercharging may be performed by the second supercharger. Along with the difference in pressure in the intake passage due to the supercharging, intake air may partially flow back, via the compressor bypass passage, from a relatively-high-pressure part on the downstream side relative to the second compressor to a relatively-low-pressure part on the upstream side relative to the second compressor. When such a backflow occurs, the air flowing backward to the part on the upstream side relative to the second compressor is supercharged again by the second compressor. Due to repetition of the supercharging, hot air flows back, so that a temperature of the intake passage gradually increases and then becomes excessively high. Further, in the internal combustion engine equipped with the superchargers, an intercooler for cooling down the supercharged air is provided in a part of the intake passage on the downstream side relative to the supercharger. That is, the air, the temperature of which becomes excessively high, might flow into the intercooler, so that coolant circulating through the intercooler might be overheated and boiled.

The present invention provides a control device for an internal combustion engine and a control method thereof, each of which is able to restrain boiling of coolant circulating through an intercooler.

An example aspect of the present invention provides a control device for controlling an internal combustion engine. The internal combustion engine includes a first supercharger including a first compressor and a first turbine, a second supercharger including a second compressor and a second turbine, the first compressor and the second compressor is provided in an intake passage sequentially from an upstream side along a flow direction of intake air, the second turbine and the first turbine is provided in an exhaust passage sequentially from the upstream side along a flow direction of exhaust air, the first supercharger and the second supercharger is disposed in series, a compressor bypass passage provided in the intake passage, the compressor bypass passage is configured to flow air by bypassing the second compressor, a compressor bypass valve provided in the intake passage, the compressor bypass valve is configured to open and close the compressor bypass passage, a turbine bypass passage provided in the exhaust passage, the turbine bypass passage is configured to flow the exhaust air by bypassing the second turbine, a turbine bypass valve provided in the exhaust passage, the turbine bypass valve is configured to open and close the turbine bypass passage, an intercooler provided in the intake passage on a downstream side relative to the second compressor, and an electric pump provided in a path for coolant flowing through the intercooler, the electric pump is configured to circulate the coolant through the path. The control device includes an electronic control unit configured to (i) detect that the compressor bypass valve is stuck in an opened state, and (ii) increase a driving amount of the electric pump when a state that the compressor bypass valve is stuck in the opened state is detected as compared to a driving amount of the electric pump when the state that compressor bypass valve is stuck in the opened state is not detected, such that a flow rate of the coolant circulating through the intercooler increases. An example aspect of the present disclosure provides a control method for an internal combustion engine. The internal combustion engine includes a first supercharger including a first compressor and a first turbine, a second supercharger including a second compressor and a second turbine, the first compressor and the second compressor is provided in an intake passage sequentially from an upstream side along a flow direction of intake air, the second turbine and the first turbine is provided in an exhaust passage sequentially from the upstream side along a flow direction of exhaust air, the first supercharger and the second supercharger is disposed in series, a compressor bypass passage provided in the intake passage, the compressor bypass passage is configured to flow air by bypassing the second compressor, a compressor bypass valve provided in the intake passage, the compressor bypass valve is configured to open and close the compressor bypass passage, a turbine bypass passage provided in the exhaust passage, the turbine bypass passage is configured to flow the exhaust air by bypassing the second turbine, a turbine bypass valve provided in the exhaust passage, the turbine bypass valve is configured to open and close the turbine bypass passage, an intercooler provided in the intake passage on a downstream side relative to the second compressor, and an electric pump provided in a path for coolant flowing through the intercooler, the electric pump is configured to circulate the coolant through the path. The control method includes (i) detecting that the compressor bypass valve is stuck in an opened state and (ii) increase a driving amount of the electric pump when a state that the compressor bypass valve is stuck in the opened state is detected as compared to a driving amount of the electric pump when the state that compressor bypass valve is stuck in the opened state is not detected, such that a flow rate of the coolant circulating through the intercooler increases.

According to the above configuration, when the compressor bypass valve stuck in the opened state is detected, the flow rate of the coolant circulating through the intercooler is increased. Accordingly, even in a case where counter flow of the air occurs along with the compressor bypass valve stuck in the opened state and supercharging is repeated due to the air flowing back through the compressor bypass passage, which causes the intercooler to perform heat exchange of excessively high-temperature air with the coolant, the coolant quickly passes through the intercooler. This accordingly makes it possible to restrain an increase in temperature of the coolant. That is, it is possible to restrain boiling of the coolant in the intercooler.

In the control device for the internal combustion, the electronic control unit may be configured to fully open the turbine bypass valve when the compressor bypass valve is stuck in an opened state is detected.

According to the above configuration, when the compressor bypass valve stuck in the opened state is detected, the turbine bypass valve is fully opened. That is, since a flow rate of the exhaust gas passing through the turbine bypass passage increases, a rotation of the second turbine is restrained, so that supercharging by the second compressor is restrained. This accordingly makes it possible to restrain the air from becoming excessively high in temperature along with the repetition of the supercharging at the time when the compressor bypass valve is stuck in the opened state. That is, it is possible to restrain the air flowing into the intercooler from becoming excessively high in temperature and to restrain boiling of the coolant in the intercooler.

In the control device for the internal combustion engine, the control device may further include an intake pressure sensor configured to detect an intake pressure on the downstream side relative to the compressor bypass valve, wherein the electronic control unit may be configured to i) calculate a target opening degree of the compressor bypass valve and ii) drive the compressor bypass valve based on the target opening degree of the compressor bypass valve, the electronic control unit may be configured to i) calculate a target opening degree of the turbine bypass valve and ii) drive the turbine bypass valve based on the target opening degree of the turbine bypass valve, the electronic control unit may be configured to calculate the target opening degree of the compressor bypass valve, and the electronic control unit may be configured to detect that the compressor bypass valve is stuck in the opened state based on the intake pressure detected by the intake pressure sensor and the target opening degree of the compressor bypass valve.

A value of the intake pressure to be detected by the intake pressure sensor at the time when the opening degree of the compressor bypass valve is controlled to a value equal to the target opening degree can be estimated based on the target opening degree. Accordingly, by comparing the intake pressure estimated from the target opening degree with an actual intake pressure, it is possible to detect whether or not the compressor bypass valve is controlled so as to achieve the target opening degree. That is, with the use of the target opening degree and the detection value of the intake pressure sensor like the above configuration, it is possible to detect the compressor bypass valve is stuck in the opened state.

### BRIEF DESCRIPTION OF THE DRAWINGS

Features, advantages, and technical and industrial significance of exemplary embodiments of the invention will be described below with reference to the accompanying drawings, in which like numerals denote like elements, and wherein:
FIG. 1 is a schematic view illustrating a control device of a first embodiment in terms of a control device for an internal combustion engine, and an internal combustion engine provided as a controlled object of the control device and having a supercharging system and a cooling system;
FIG. 2 is a view illustrating a control mode of the supercharging system and a relationship between an engine rotation speed of the internal combustion engine and a fuel injection amount, in terms of the supercharging system as the controlled object of the control device according to the embodiment;
FIG. 3 is a flowchart illustrating a valve defect determination process according to the embodiment;
FIG. 4 is a flowchart illustrating a control on the cooling system according to the embodiment; and
FIG. 5 is a flowchart illustrating controls on a cooling system and a supercharging system according to a second embodiment in terms of the control device for the internal combustion engine.

### DETAILED DESCRIPTION OF EMBODIMENTS

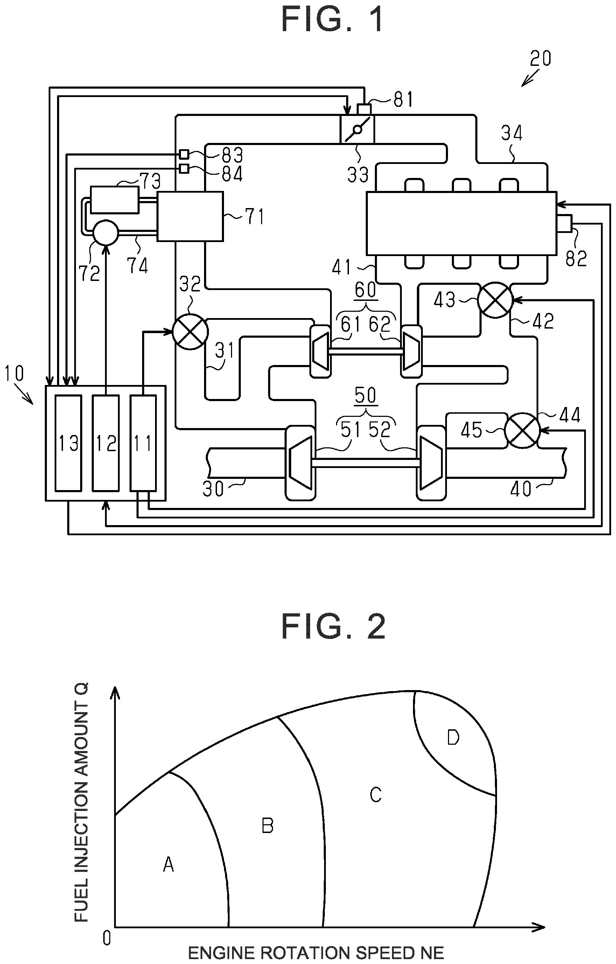

The following describes an electronic control unit (ECU) 10 according to a first embodiment of a control device for an internal combustion engine, with reference to FIGS. 1 to 4.

With reference to FIG. 1, an internal combustion engine 20, which is a controlled object of the ECU 10 is described. The internal combustion engine 20 includes a plurality of cylinders. The internal combustion engine 20 introduces air into the cylinder through an intake passage 30. Further, the internal combustion engine 20 injects fuel from a fuel injection valve and burns the air and the fuel in the cylinder. The internal combustion engine 20 discharges exhaust air through an exhaust passage 40. In the middle of the exhaust passage 40, a first supercharger 50 and a second supercharger 60 for rotating a turbine by use of the exhaust air are provided.

The first supercharger 50 includes a first turbine 52, and a first compressor 51 driven along with a rotation of the first turbine 52. The second supercharger 60 includes a second turbine 62, and a second compressor 61 driven along with a rotation of the second turbine 62. The first supercharger 50 is a supercharger having a larger capacity than the second supercharger 60. Further, the first compressor 51 is disposed on an upstream side relative to the second compressor 61 in the intake passage 30. The first turbine 52 is disposed on a downstream side relative to the second turbine 62 in the exhaust passage 40. That is, the first supercharger 50 and the second supercharger 60 are disposed in series in the internal combustion engine 20.

A compressor bypass passage 31 bypassing the second compressor 61 is provided in the intake passage 30. Further, a compressor bypass valve 32 for opening and closing the compressor bypass passage 31 is provided in the intake passage 30. An opening degree of the compressor bypass valve 32 is adjusted by an electric actuator. When the compressor bypass valve 32 is fully closed, the air passing through the first compressor 51 all flows into the second compressor 61. In the meantime, when the compressor bypass valve 32 is opened, the air passing through the first compressor 51 passes through the compressor bypass passage 31 and flows into a part of the intake passage 30 on the downstream side relative to the second compressor 61. That is, when the opening degree of the compressor bypass valve 32 is adjusted, it is possible to adjust a ratio between a flow rate of the air flowing into the second compressor 61 and a flow rate of the air passing through the compressor bypass passage 31 so as to bypass the second compressor 61.

An intercooler 71 for cooling the air in the intake passage 30 is provided in the intake passage 30 on the downstream side relative to the second compressor 61. A coolant passage 74 is connected to the intercooler 71, so that a path circulating coolant through the intercooler 71 is formed by the coolant passage 74. An electric pump 72 for introducing the coolant into the intercooler 71 is provided in the coolant passage 74. Further, the coolant passage 74 is also provided with a radiator 73 for cooling the coolant that has passed through the intercooler 71. In the internal combustion engine 20, a cooling system for the intake air is constituted by the intercooler 71, the pump 72, the radiator 73, and the coolant passage 74.

An intake manifold 34 is connected to a cylinder head of the internal combustion engine 20. The intake manifold 34 is configured to introduce the air in the intake passage 30 into the cylinders in a distributed manner. A throttle valve 33 is provided between the intake manifold 34 and the intercooler 71 in the intake passage 30.

Further, an exhaust manifold 41 is connected to the cylinder head of the internal combustion engine 20. The exhaust manifold 41 is configured to gather the exhaust air discharged from the cylinders. The exhaust air thus gathered through the exhaust manifold 41 is discharged through the exhaust passage 40.

The second turbine 62 of the second supercharger 60 is disposed in the exhaust passage 40 on the downstream side relative to the exhaust manifold 41. Further, a turbine bypass passage 42 that bypasses the second turbine 62 is provided in the exhaust passage 40. Further, a turbine bypass valve 43 for opening and closing the turbine bypass passage 42 is provided in the exhaust passage 40. An opening degree of the turbine bypass valve 43 is adjusted by an electric actuator. When the turbine bypass valve 43 is fully closed, the exhaust air that has passed through the exhaust manifold 41 all flows into the second turbine 62. In the meantime, when the turbine bypass valve 43 is opened, the exhaust air that has passed through the exhaust manifold 41 passes through the turbine bypass passage 42 and flows into a part of the exhaust passage 40 on the downstream side relative to the second turbine 62. That is, when the opening degree of the turbine bypass valve 43 is adjusted, it is possible to adjust a ratio between a flow rate of the exhaust air to flow into the second turbine 62 and a flow rate of the exhaust air that passes through the turbine bypass passage 42 and bypasses the second turbine 62.

The first turbine 52 of the first supercharger 50 is disposed on the downstream side relative to the second turbine 62 in the exhaust passage 40. Further, an exhaust bypass passage 44 that bypasses the first turbine 52 is provided in the exhaust passage 40. Further, an exhaust bypass valve 45 for opening and closing the exhaust bypass passage 44 is provided in the exhaust passage 40. The exhaust bypass valve 45 is controlled to be opened and closed by an electric actuator. When the exhaust bypass valve 45 is fully closed, the exhaust air flowing from the upstream side relative to the first turbine 52 all flows all into the first turbine 52. In the meantime, when the exhaust bypass valve 45 is opened, the exhaust air flowing through the exhaust passage 40 from the upstream side relative to the first turbine 52 passes through the exhaust bypass passage 44 and flows into a part of the exhaust passage 40 on the downstream side relative to the first turbine 52. That is, when the opening degree of the exhaust bypass valve 45 is adjusted, it is possible to adjust a ratio between a flow rate of the exhaust air to flow into the first turbine 52 and a flow rate of the exhaust air that passes through the exhaust bypass passage 44 and bypasses the first turbine 52.

In the internal combustion engine 20, a supercharging system that supercharges the intake air is constituted by the first supercharger 50, the second supercharger 60, the compressor bypass passage 31, the compressor bypass valve 32, the turbine bypass passage 42, the turbine bypass valve 43, the exhaust bypass passage 44, and the exhaust bypass valve 45.

Further, the internal combustion engine 20 includes various sensors for detecting an operating state of the internal combustion engine 20. More specifically, the internal combustion engine 20 includes: a throttle sensor 81 for detecting an opening degree of the throttle valve 33; a rotation number sensor 82 for detecting the number of rotations of an output shaft of the internal combustion engine 20; an intake pressure sensor 83 disposed in a part between the intercooler 71 and the throttle valve 33 in the intake passage 30; and an intake-air temperature sensor 84 for detecting a temperature of the air that has passed through the intercooler 71. Various sensors including the throttle sensor 81, the rotation number sensor 82, the intake pressure sensor 83, the intake-air temperature sensor 84, and the like are connected to the ECU10. Detection values from the various sensors are input into the ECU 10.

The ECU 10 calculates a fuel injection amount Q based on the operating state of the internal combustion engine 20 and controls the internal combustion engine 20 to perform fuel injection based on the fuel injection amount Q. Further, the ECU 10 controls the opening degree of the throttle valve 33 based on the operating state of the internal combustion engine 20. Further, the ECU 10 includes a supercharging-system controlling portion 11 having a function to control a boost pressure to be obtained by driving of the first supercharger 50 and the second supercharger 60. Further, the ECU 10 includes a cooling-system controlling portion 12 having a function to change a flow rate of coolant circulating through the intercooler 71 by controlling driving of the pump 72. Further, the ECU 10 includes a valve defect detection portion 13 having a function to detect defects of the compressor bypass valve 32, the turbine bypass valve 43, the exhaust bypass valve 45, and the like.

Next will be described a basic control on the supercharging system by the supercharging-system controlling portion 11 of ECU 10, with reference to FIGS. 1 and 2. The supercharging-system controlling portion 11 has a function to control a boost pressure by changing working states of the first supercharger 50 and the second supercharger 60 according to the operating state of the internal combustion engine 20. More specifically, a target boost pressure to be obtained by the first supercharger 50 and the second supercharger 60 is set based on the fuel injection amount Q and an engine rotation speed NE detected by the rotation number sensor 82. Target opening degrees of the compressor bypass valve 32, the turbine bypass valve 43, and the exhaust bypass valve 45 are calculated so that the target boost pressure is obtained. The driving of the electric actuators is controlled in terms of the compressor bypass valve 32, the turbine bypass valve 43, and the exhaust bypass valve 45, so that the opening degrees of the compressor bypass valve 32, the turbine bypass valve 43, and the exhaust bypass valve 45 reach their target opening degrees. That is, the compressor bypass valve 32, the turbine bypass valve 43, and the exhaust bypass valve 45 are controlled so as to change the working states of the first supercharger 50 and the second supercharger 60.

As illustrated in FIG. 2, a relationship between the operating state of the internal combustion engine 20 based on the engine rotation speed NE and the fuel injection amount Q and the working states of the first supercharger 50 and the second supercharger 60 is stored in the ECU 10 in advance. The supercharging-system controlling portion 11 controls the supercharging system according to the operating state based on the relationship. The operating state of the internal combustion engine 20 is sectioned by a region A, a region B, a region C, and a region D as illustrated in FIG. 2, and the supercharging-system controlling portion 11 performs a basic control to switch first to fourth supercharging modes described below according to each region.

When the operating state of the internal combustion engine 20 is in the region A, the supercharging-system controlling portion 11 controls the supercharging system based on the first supercharging mode. In the first supercharging mode, the compressor bypass valve 32, the turbine bypass valve 43, and the exhaust bypass valve 45 are all fully closed. That is, the control is performed so that supercharging is performed by the first supercharger 50 and the second supercharger 60.

When the operating state of the internal combustion engine 20 is in the region B, the supercharging-system controlling portion 11 controls the supercharging system based on the second supercharging mode. In the second supercharging mode, the opening degree of the turbine bypass valve 43 is adjusted. Note that the compressor bypass valve 32 and the exhaust bypass valve 45 are fully closed. That is, an amount of the exhaust air to flow into the second turbine 62 is adjusted, so as to adjust a rotational amount of the second turbine 62. That is, the control is performed so that a working amount of the second supercharger 60 is controlled and supercharging is performed by the first supercharger 50 and the second supercharger 60.

When the operating state of the internal combustion engine 20 is in the region C, the supercharging-system controlling portion 11 controls the supercharging system based on the third supercharging mode. In the third supercharging mode, the turbine bypass valve 43 is fully opened. Further, the compressor bypass valve 32 is fully opened. Note that the exhaust bypass valve 45 is fully closed. Namely, the exhaust air bypasses the second turbine 62 and the air bypasses the second compressor 61. That is, an operation of the second supercharger 60 is stopped and supercharging is performed only by the first supercharger 50.

When the operating state of the internal combustion engine 20 is in the region D, the supercharging-system controlling portion 11 controls the supercharging system based on the fourth supercharging mode. In the fourth supercharging mode, the turbine bypass valve 43 and the compressor bypass valve 32 are fully opened. Further, the opening degree of the exhaust bypass valve 45 is controlled to an opening side. That is, the exhaust air bypasses the first turbine 52.

Next will be described a basic control on the cooling system by the cooling-system controlling portion 12 of the ECU 10. The cooling-system controlling portion 12 acquires a temperature of the air that has passed through the intercooler 71 from a detection value of the intake-air temperature sensor 84, and then calculates a basic duty ratio to drive the pump 72. Then, the pump 72 is driven based on the basic duty ratio thus calculated, thereby changing a flow rate of the coolant circulating through the intercooler 71. Note that the cooling-system controlling portion 12 calculates the basic duty ratio to be larger as the intake-air temperature detected by the intake-air temperature sensor 84 is higher, so as to increase the flow rate of the coolant to be sent to the intercooler 71 by the pump 72.

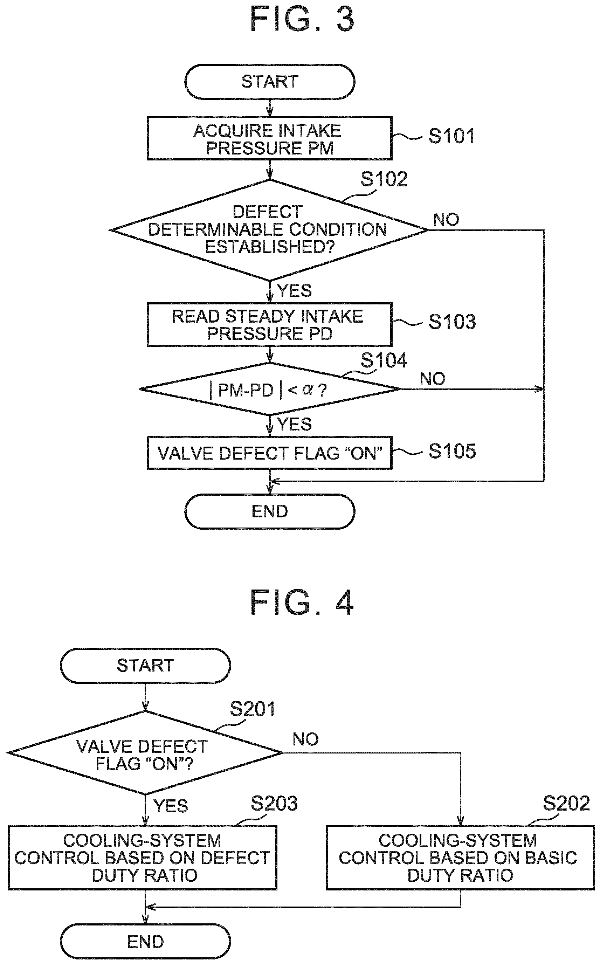

Next will be described the valve defect detection portion 13 with reference to FIG. 3. The valve defect detection portion 13 performs a valve defect determination process illustrated in FIG. 3. In the valve defect determination process, it is determined which valve has a defect, the compressor bypass valve 32, the turbine bypass valve 43, or the exhaust bypass valve 45.

The valve defect determination process illustrated in FIG. 3 is a routine performed repeatedly every predetermined period. When the valve defect detection portion 13 starts the valve defect determination process, the valve defect detection portion 13 first acquires an intake pressure PM, which is a detection value of the intake pressure sensor 83, in step S101.

Then, the valve defect detection portion 13 acquires the engine rotation speed NE, which is a detection value of the rotation number sensor 82, in step S102, and determines whether a defect determinable condition is established or not based on the engine rotation speed NE and the fuel injection amount Q.

Here, the defect determinable condition is a condition based on which it is determined whether or not the operating state of the internal combustion engine 20 is a state where the defect of the valve is detectable, and the defect determinable condition is set in advance based on the engine rotation speed NE and the fuel injection amount Q. Herein, when the control mode of the supercharging system is the first supercharging mode, it is determined that the defect determinable condition is established. That is, when the engine rotation speed NE is small, that is, the internal combustion engine 20 rotates at a low rotation number, and when the internal combustion engine 20 is in a predetermined operating range in which the fuel injection amount Q is set to be small, the defect determinable condition is established. Accordingly, the valve defect determination process is performable in a state where the operating state of the internal combustion engine 20 can hardly change.

When the defect determinable condition is not established (S102: NO), the valve defect detection portion 13 finishes this routine. In the meantime, when the defect determinable condition is established (S102: YES), a process of step S103 is performed, and the valve defect detection portion 13 reads a steady intake pressure PD. The steady intake pressure PD is a value stored in the ECU 10 in advance as an estimated intake pressure according to the operating state of the internal combustion engine 20. The steady intake pressure PD can be estimated based on a target opening degree of the compressor bypass valve 32, a target opening degree of the turbine bypass valve 43, a target opening degree of the exhaust bypass valve 45, and the operating state such as the engine rotation speed NE and the fuel injection amount Q. In the first supercharging mode, the compressor bypass valve 32, the turbine bypass valve 43, and the exhaust bypass valve 45 are all fully closed. Accordingly, herein, the steady intake pressure PD is an intake pressure estimated on the premise that the compressor bypass valve 32, the turbine bypass valve 43, and the exhaust bypass valve 45 are all fully closed.

Subsequently, the valve defect detection portion 13 proceeds to a process of step S104, in which it is determined whether or not an absolute value of a difference between the intake pressure PM and the steady intake pressure PD is smaller than a predetermined value α. For example, when the absolute value of the difference between the intake pressure PM and the steady intake pressure PD is the predetermined value α or more, it can be determined that the difference between the intake pressure PM and the steady intake pressure PD is a predetermined amount or more.

When the absolute value of the difference between the intake pressure PM and the steady intake pressure PD is the predetermined value α or more (S104: NO), the valve defect detection portion 13 finishes this routine. In the meantime, when the absolute value of the difference between the intake pressure PM and the steady intake pressure PD is smaller than the predetermined value α (S104: YES), the valve defect detection portion 13 proceeds to a process of step S105, in which a valve defect flag is turned "ON." Here, this routine is finished.

In the valve defect determination process described above, when the valve defect flag is turned "ON," it can be determined that any of the valves has a defect. When any of the valves has a defect, the compressor bypass valve 32 may be stuck in the opened state. Accordingly, when the valve defect flag is turned "ON" by the valve defect determination process performed by the valve defect detection portion 13, it can be accordingly detected that the compressor bypass valve 32 is stuck in the opened state.

Next will be described the control on the cooling system with reference to FIG. 4. The control is performed by the ECU 10. The control is a routine repeatedly performed every predetermined period. First, in step S201, the ECU 10 determines whether the valve defect flag is turned "ON" or not. When the valve defect flag is not turned "ON" (S201: NO), a process of step S202 is performed subsequently. In step S202, the ECU 10 outputs, to the cooling-system controlling portion 12, a command to perform the basic control on the cooling system. That is, the ECU 10 outputs a command to control the cooling system based on a basic duty ratio. The cooling-system controlling portion 12 calculates the basic duty ratio based on the command from the ECU 10 and drives the pump 72 by use of the basic duty ratio. Here, this routine is finished.

In the meantime, when the valve defect flag is turned "ON" (S201: YES), a process of step S203 is performed. In step S203, the ECU 10 outputs, to the cooling-system controlling portion 12, a command to control the cooling system based on a defect duty ratio. The cooling-system controlling portion 12 calculates the defect duty ratio based on the command from the ECU 10 and drives the pump 72 by use of the defect duty ratio. Note that, when the cooling-system controlling portion 12 performs the basic control on the cooling system at this time, the cooling-system controlling portion 12 finishes the basic control and starts calculation of the defect duty ratio. Then, this routine is finished.

Here, the defect duty ratio calculated by the cooling-system controlling portion 12 is a duty ratio to drive the pump 72 so that the flow rate of the coolant circulating through the intercooler 71 reaches a prescribed flow rate. The prescribed flow rate is set based on a result of experiment or the like to be performed in advance so as to restrain boiling of the coolant if the flow rate of the coolant circulating through the intercooler 71 is the prescribed flow rate. Further, the prescribed flow rate is set be larger than a flow rate of the coolant to circulate at the time when the pump 72 is driven based on the basic duty ratio.

Next will be described an action by the ECU 10 according to the first embodiment. When the valve defect flag is not turned "ON," the process of step S202 is performed through the routine described with reference to FIG. 4. That is, the ECU 10 outputs, to the cooling-system controlling portion 12, the command to control the cooling system based on the basic duty ratio. Accordingly, the cooling-system controlling portion 12 continues the basic control on the cooling system.

In the meantime, when the valve defect flag is turned "ON," that is, when it is detected that the compressor bypass valve 32 is stuck in the opened state, the process of step S203 is performed through the routine described with reference to FIG. 4. That is, the ECU 10 outputs, to the cooling-system controlling portion 12, the command to control the cooling system based on the defect duty ratio. Accordingly, the pump 72 is driven by the cooling-system controlling portion 12 based on the defect duty ratio.

As described above, according to the ECU 10, when the valve defect detection portion 13 detects that the compressor bypass valve 32 is stuck in the opened state, the pump 72 is driven based on the defect duty ratio. Accordingly, the flow rate of the coolant circulating through the intercooler 71 reaches the prescribed flow rate. In other words, when it detects that the compressor bypass valve 32 is stuck in the opened state, a driving amount of the pump 72 is increased in comparison with the basic control on the cooling system. When the driving amount of the pump 72 is increased as such in comparison with the time when the stuck opening of the compressor bypass valve 32 is not detected, the flow rate of the coolant circulating through the intercooler 71 is increased.

According to the first embodiment described above, the following effects can be obtained. (1) Even if the compressor bypass valve 32 is stuck in the opened state and heat exchange of the excessively high-temperature air with the coolant is performed by the intercooler 71, the coolant quickly passes through the intercooler 71. This makes it possible to restrain an increase in temperature of the coolant. That is, it is possible to restrain boiling of the coolant in the intercooler 71.

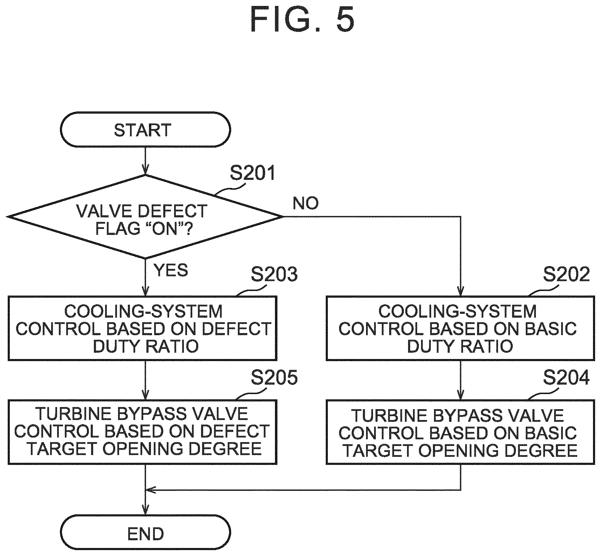

Next will be described a second embodiment of the control device for the internal combustion engine. The second embodiment is different from the first embodiment in that the cooling system and the supercharging system are controlled according to a routine illustrated in FIG. 5 in substitution for the routine described with reference to FIG. 4. A constituent common in the first embodiment has the same reference sign as in the first embodiment, and a description thereof is omitted.

Similarly to the routine described with reference to FIG. 4, the routine illustrated in FIG. 5 is performed repeatedly by the ECU 10 every predetermined period. As illustrated in FIG. 5, in this routine, a process of step S204 is performed following the process of step S202. In the process of step S204, the ECU 10 outputs, to the supercharging-system controlling portion 11, a command to control the turbine bypass valve 43 by use of a basic target opening degree. Here, the basic target opening degree is a target opening degree of the turbine bypass valve 43, calculated by the basic control on the supercharging system. The supercharging-system controlling portion 11 calculates the basic target opening degree based on the engine rotation speed NE and the fuel injection amount Q, in response to the command from the ECU 10, and controls the opening degree of the turbine bypass valve 43 by use of the basic target opening degree. Then, this routine is finished. Note that, subsequently to the calculation of the basic target opening degree, the supercharging-system controlling portion 11 calculates a target opening degree of the compressor bypass valve 32 and a target opening degree of the exhaust bypass valve 45, so as to perform a control based on the basic control on the supercharging system. That is, in this routine, when the valve defect flag is not turned "ON" (S201: NO), the cooling system is controlled by the cooling-system controlling portion 12 based on the basic duty ratio through step S202. In addition to that, the opening degree of the turbine bypass valve 43 is controlled by use of the basic target opening degree. Then, this routine is finished.

In the meantime, when the valve defect flag is turned "ON" (S201: YES), a process of step S205 is performed subsequently to the process of step S203. In the process of step S205, the ECU 10 outputs, to the supercharging-system controlling portion 11, a command to control the turbine bypass valve 43 by use of a defect target opening degree. Herein, the supercharging-system controlling portion 11 sets an opening degree to fully open the turbine bypass valve 43 as the defect target opening degree based on the command from the ECU 10. Further, the supercharging-system controlling portion 11 controls the turbine bypass valve 43 based on the defect target opening degree. That is, in this routine, when the valve defect flag is turned "ON" (S201: YES), the cooling system is controlled by the cooling-system controlling portion 12 based on the defect duty ratio through step S203. In addition to that, the opening degree of the turbine bypass valve 43 is controlled by use of the defect target opening degree. Note that, at this time, the supercharging-system controlling portion 11 controls the exhaust bypass valve 45 based on the basic control on the supercharging system. Then, this routine is finished.

Next will be described an action by the ECU 10 according to the second embodiment. When the valve defect flag is not turned "ON," the process of S204 is performed subsequently to the process of step S202 through the routine described with reference to FIG. 5, and the ECU 10 outputs, to the supercharging-system controlling portion 11, the command to control the turbine bypass valve 43 by use of the basic target opening degree. Accordingly, the supercharging-system controlling portion 11 continues the basic control on the supercharging system.

In the meantime, when the valve defect flag is turned "ON," that is, when stuck opening of it is detected that the compressor bypass valve 32 is stuck in the opened state , the process of step S205 is performed subsequently to the process of step S203 through the routine described with reference to FIG. 5. That is, the flow rate of the coolant circulating through the intercooler 71 is increased by the cooling-system controlling portion 12, and the turbine bypass valve 43 is controlled to be fully opened by the supercharging-system controlling portion 11. When the opening degree of the turbine bypass valve 43 is fully opened, a rotation of the second turbine 62 is restrained. That is, in addition to an increase in the flow rate of the coolant circulating through the intercooler 71, the supercharging by the second compressor 61 is restrained.

According to the second embodiment described above, the following effects can be obtained in addition to the effect (1) of the first embodiment. (2) When it is detected that the compressor bypass valve 32 is stuck in the opened state, the supercharging by the second compressor 61 is restrained. Accordingly, an occurrence of backflow of the air via the compressor bypass passage 31 is restrained. That is, it is possible to restrain the air flowing into the intercooler 71 from becoming excessively high in temperature, and to restrain boiling of the coolant circulating through the intercooler 71.

Note that the second embodiment is performable in the following embodiment in which the second embodiment is modified appropriately. Subsequently to the process of increasing the flow rate of the coolant circulating through the intercooler 71, the turbine bypass valve 43 is fully opened. The turbine bypass valve 43 may be fully opened first, and the flow rate of the coolant circulating through the intercooler 71 may be increased.

As the detect target opening degree, the opening degree to fully open the turbine bypass valve 43 is set. If a rotation of the second turbine 62 can be restrained without controlling the turbine bypass valve 43 to be fully opened, it is possible to yield the same effect as the effect (2). That is, the defect target opening degree may be calculated as an opening degree larger than the basic target opening degree, so that the turbine bypass valve 43 can be controlled based on the defect target opening degree.

In addition, there are following matters as changeable elements common to the first and second embodiments. The valve defect detection portion 13 that performs the valve defect determination process has been exemplified. The valve defect detection portion 13 can detect a defect of a valve by performing a process other than this. For example, defects of the compressor bypass valve 32, the turbine bypass valve 43, and the exhaust bypass valve 45 can be detected such that respective sensors for detecting respective opening degrees of the compressor bypass valve 32, the turbine bypass valve 43, and the exhaust bypass valve 45 are provided, and values detected from the respective sensors are compared with target opening degrees calculated by the supercharging-system controlling portion 11.

A defective-valve specification process to specify a valve having a defect can be performed subsequently to the valve defect determination process. The defective-valve specification process may be performed, for example, such that an inversion operation to invert an open and closed state of a valve as a determination target is performed and detection values of the intake pressure sensor 83 before and after the execution of the inversion operation are compared with each other. Here, if the detection value of the intake pressure sensor 83 does not change even after the valve is subjected to the inversion operation, it can be confirmed that the valve as the determination target does not work according to the inversion operation. That is, it can be determined that the valve as the determination target has a defect. By sequentially performing such a process on each of the valves disposed in the intake passage 30 and the exhaust passage 40 by changing the valve as the determination target from one to another, it is possible to specify a valve having a defect. When the defective-valve specification process is performed as such, the compressor bypass valve 32 stuck in the opened state can be detected more accurately.

In the basic control on the cooling system, the basic duty ratio is calculated based on the intake-air temperature detected by the intake-air temperature sensor 84. The basic duty ratio can be calculated based on a parameter indicative of an operating state of the internal combustion engine 20, except for the intake-air temperature. Accordingly, it is not necessary to provide the intake-air temperature sensor 84.

The defect duty ratio may be a duty ratio that can increase the flow rate of the coolant circulating through the intercooler 71 in comparison with a time when the pump 72 is driven based on the basic duty ratio. For example, when a flow rate of the coolant circulating through the intercooler 71 at the time of driving the pump 72 based on the basic duty ratio is assumed the basic flow rate, the defect duty ratio may be calculated as a duty ratio that can provide a flow rate obtained by adding a correction flow rate to the basic flow rate. The correction flow rate can be set as a constant of a positive value. Even when the pump 72 is driven based on the defect duty ratio calculated as such, it is possible to increase the flow rate of the coolant circulating through the intercooler 71.

The defect duty ratio can be calculated by a feedback control based on a temperature detected by the intake-air temperature sensor 84 provided on the downstream side relative to the intercooler 71. That is, a duty ratio is calculated so that the coolant at a flow rate that can decrease the temperature detected by the intake-air temperature sensor 84 to a predetermined temperature or less circulates through the intercooler 71, and the duty ratio thus calculated can be used as the defect duty ratio. Even in a case where the pump 72 is driven based on the defect duty ratio calculated as such, when the compressor bypass valve 32 is stuck in the opened state, the temperature detected by the intake-air temperature sensor 84 increases. This results in that the flow rate of the coolant circulating through the intercooler 71 increases.

In the first and second embodiments described above, when the valve defect flag is not turned "ON," the ECU 10 outputs, to the cooling-system controlling portion 12, a command to drive the pump 72 based on the basic duty ratio, so as to continue the basic control on the cooling system. Here, in the cooling-system controlling portion 12, the basic control on the cooling system is performed even when the command is not received from the ECU 10. That is, in the process of step S202, the ECU 10 may not output, to the cooling-system controlling portion 12, the command to control the cooling system based on the basic duty ratio. Even in this case, it is possible to continue the basic control on the cooling system.

Similarly, in the second embodiment, in the process of step S204, the ECU 10 may not output, to the supercharging-system controlling portion 11, the command to control the turbine bypass valve 43 by use of the basic target opening degree. Even in this case, it is possible to continue the basic control on the supercharging system.

The ECU 10 including the supercharging-system controlling portion 11, the cooling-system controlling portion 12, and the valve defect detection portion 13 is exemplified. Respective control devices having computing functions independent of the ECU 10 may include the supercharging-system controlling portion 11, the cooling-system controlling portion 12, and the valve defect detection portion 13, and the ECU 10 may be a main control device that unifies the respective control devices.

The supercharging modes controlled by the supercharging-system controlling portion 11 are not limited to the first to fourth supercharging modes exemplified above. By applying the ECU 10 to an internal combustion engine in which the air may flow back to repeatedly cause supercharging when the compressor bypass valve 32 is stuck in the opened state, it is possible to restrain boiling of the coolant circulating through the intercooler 71.

The ECU 10 can be also applied to an internal combustion engine including a supercharger system configured such that a first intercooler is provided in a part that connects the first compressor 51 to the second compressor 61 in the intake passage 30, and a second intercooler is provided in a part of the intake passage 30 on the downstream side relative to the second compressor 61. At this time, the compressor bypass passage 31 may communicate the upstream side relative to the second compressor 61 with the downstream side relative to the second intercooler. Even in such a configuration, similarly to the first and second embodiments, the air may flow back to repeatedly cause supercharging at the time when the compressor bypass valve 32 is stuck in the opened state. Accordingly, by applying the ECU 10, it is possible to restrain boiling of the coolant circulating through the intercooler 71.

A control device applied to an internal combustion engine (20) including a first supercharger (50) and a second supercharger (60) disposed in series includes: a supercharging-system controlling portion (11) for controlling a boost pressure; a cooling-system controlling portion (12) for controlling a flow rate of coolant circulating through an intercooler (71); and a valve defect detection portion (13) for detecting that a compressor bypass valve (32) is stuck in an opened state. When the valve defect detection portion (13) detects that the compressor bypass valve (32) is stuck in the opened state, the cooling-system controlling portion (12) increases a driving amount of an electric pump (72) so as to increase a flow rate of the coolant circulating through the intercooler (71).

## Claims

1. A control device for controlling an internal combustion engine which includes
a first supercharger (50) including a first compressor (51) and a first turbine (52),
a second supercharger (60) including a second compressor (61) and a second turbine (62),
the first compressor (51) and the second compressor (61) being provided in an intake passage (30) sequentially from an upstream side along a flow direction of intake air,
the second turbine (62) and the first turbine (52) being provided in an exhaust passage (40) sequentially from the upstream side along a flow direction of exhaust air,
the first supercharger (50) and the second supercharger (60) being disposed in series,
a compressor bypass passage (31) provided in the intake passage (30), the compressor bypass passage (31) being configured to flow air by bypassing the second compressor (61),
a compressor bypass valve (32) provided in the intake passage (30), the compressor bypass valve (32) being configured to open and close the compressor bypass passage (31),
a turbine bypass passage (42) provided in the exhaust passage (40), the turbine bypass passage (42) being configured to flow the exhaust air by bypassing the second turbine (62),
a turbine bypass valve (43) provided in the exhaust passage (40), the turbine bypass valve (43) being configured to open and close the turbine bypass passage (42),
an intercooler (71) provided in the intake passage (30) on a downstream side relative to the second compressor (61), and
an electric pump (72) provided in a path for coolant flowing through the intercooler (71), the electric pump (72) being configured to circulate the coolant through the path,
the control device **characterized by**
an electronic control unit (10) configured to
(i) detect that the compressor bypass valve (32) is stuck in an opened state, and
(ii) increase a driving amount of the electric pump (72) when a state that the compressor bypass valve (32) is stuck in the opened state is detected as compared to a driving amount of the electric pump (72) when the state that compressor bypass valve (32) is stuck in the opened state is not detected such that a flow rate of the coolant circulating through the intercooler (71) increases.

2. The control device for the internal combustion engine, according to claim 1, **characterized in that**
the electronic control unit (10) is configured to fully open the turbine bypass valve (43) when the state that the compressor bypass valve (32) is stuck in an opened state is detected.

3. The control device for the internal combustion engine, according to claim 1 or 2, further comprising
an intake pressure sensor (83) configured to detect an intake pressure on the downstream side relative to the compressor bypass valve (32), wherein
the electronic control unit (10) is configured to i) calculate a target opening degree of the compressor bypass valve (32) and ii) drive the compressor bypass valve (32) based on the target opening degree of the compressor bypass valve (32),
the electronic control unit (10) is configured to i) calculate a target opening degree of the turbine bypass valve (43) and ii) drive the turbine bypass valve (43) based on the target opening degree of the turbine bypass valve (43),
the electronic control unit (10) is configured to calculate the target opening degree of the compressor bypass valve (32), and
the electronic control unit (10) is configured to detect that the compressor bypass valve (32) is stuck in the opened state based on the intake pressure detected by the intake pressure sensor (83) and the target opening degree of the compressor bypass valve (32).

4. The control device for the internal combustion engine, according to any one of claims 1 to 3, further comprising
a rotation speed sensor (82) configured to detect a rotation speed of an output shaft of the internal combustion engine (20), wherein
the electronic control unit (10) is configured to calculate a fuel injection amount based on an operating state of the internal combustion engine (20), and the electronic control unit (10) is configured to determine whether or not a defect of the compressor bypass valve is detectable based on the rotation speed detected by the rotation speed sensor (82) and the fuel injection amount.

5. A control method for controlling an internal combustion engine which includes
a first supercharger (50) including a first compressor (51) and a first turbine (52),
a second supercharger (60) including a second compressor (61) and a second turbine (62),
the first compressor (51) and the second compressor (61) being provided in an intake passage (30) sequentially from an upstream side along a flow direction of intake air,
the second turbine (62) and the first turbine (52) being provided in an exhaust passage (40) sequentially from the upstream side along a flow direction of exhaust air,
the first supercharger (50) and the second supercharger (60) being disposed in series,
a compressor bypass passage (31) provided in the intake passage (30), the compressor bypass passage (31) being configured to flow air by bypassing the second compressor (61),
a compressor bypass valve (32) provided in the intake passage (30), the compressor bypass valve (32) being configured to open and close the compressor bypass passage (31),
a turbine bypass passage (42) provided in the exhaust passage (40), the turbine bypass passage (42) being configured to flow the exhaust air by bypassing the second turbine (62),
a turbine bypass valve (43) provided in the exhaust passage (40), the turbine bypass valve (43) being configured to open and close the turbine bypass passage (42),
an intercooler (71) provided in the intake passage (30) on a downstream side relative to the second compressor (61), and
an electric pump (72) provided in a path for coolant flowing through the intercooler (71), the electric pump (72) being configured to circulate the coolant through the path,
the control method **characterized by**
(i) detecting that the compressor bypass valve (32) is stuck in an opened state, and
(ii) increase a driving amount of the electric pump (72) when a state that the compressor bypass valve (32) is stuck in the opened state is detected as compared to a driving amount of the electric pump (72) when the state that compressor bypass valve (32) is stuck in the opened state is not detected such that a flow rate of the coolant circulating through the intercooler (71) increases.

## Patentansprüche

1. Steuervorrichtung zur Steuerung einer Brennkraftmaschine mit
einem ersten Turbolader (50) mit einem ersten Verdichter (51) und einer ersten Turbine (52),
einem zweiten Turbolader (60) mit einem zweiten Verdichter (61) und einer zweiten Turbine (62), wobei
der erste Verdichter (51) und der zweite Verdichter (61) in einer Einlasspassage (30) aufeinanderfolgend von einer Seite stromaufwärts in Strömungsrichtung von Einlassluft bereitgestellt sind,
die zweite Turbine (62) und die erste Turbine (52) in einer Auslasspassage (40) aufeinanderfolgend von der Seite stromaufwärts in Strömungsrichtung von Auslassluft bereitgestellt sind,
der erste Turbolader (50) und der zweite Turbolader (60) in Reihe angeordnet sind,
einer Verdichter-Umgehungspassage (31), die in der Einlasspassage (30) bereitgestellt ist, wobei die Verdichter-Umgehungspassage (31) konfiguriert ist, um Luft durch Umgehen des zweiten Verdichters (61) zu strömen,
einem Verdichter-Umgehungsventil (32), das in der Einlasspassage (30) bereitgestellt ist, wobei das Verdichter-Umgehungsventil (32) konfiguriert ist, um die Verdichter-Umgehungspassages (31) zu öffnen und zu schließen,
einer Turbinen-Umgehungspassage (42), die in der Auslasspassage (40) bereitgestellt ist, wobei die Turbinen-Umgehungspassage (42) konfiguriert ist, um die Auslassluft durch Umgehen der zweiten Turbine (62) zu strömen,
einem Turbinen-Umgehungsventil (43), das in der Auslasspassage (40) bereitgestellt ist, wobei das Turbinen-Umgehungsventil (43) konfiguriert ist, um die Turbinen-Umgehungspassage (42) zu öffnen und zu schließen,
einem Ladeluftkühler (71), der in der Einlasspassage (30) an einer Seite stromabwärts bezüglich des zweiten Verdichters (61) bereitgestellt ist, und
einer elektrischen Pumpe (72), die in einem Pfad für ein Kühlmittel bereitgestellt ist, das durch den Ladeluftkühler (71) zirkuliert, wobei die elektrische Pumpe (72) konfiguriert ist, um das Kühlmittel durch den Pfad zu zirkulieren,
die Steuervorrichtung ist **gekennzeichnet durch**
eine elektronische Steuerungseinheit (10), die konfiguriert ist zum
i) Erfassen, dass das Verdichter-Umgehungsventil (32) im geöffneten Zustand blockiert ist, und
ii) Erhöhen eines Antriebswertes der elektrischen Pumpe (72), wenn ein Zustand, in dem das Verdichter-Umgehungsventil (32) im geöffneten Zustand blockiert ist, erfasst wird, als im Vergleich mit einem Antriebswert der elektrischen Pumpe (72), wenn der Zustand, dass das Verdichter-Umgehungsventil (32) im geöffneten Zustand blockiert ist, nicht erfasst wird, so dass eine Durchflussrate des durch den Ladeluftkühler (71) zirkulierenden Kühlmittels zunimmt.

2. Steuervorrichtung für die Brennkraftmaschine gemäß Anspruch 1, **dadurch gekennzeichnet, dass**
die elektronische Steuerungseinheit (10) konfiguriert ist, um das Turbinen-Umgehungsventil (43) vollständig zu öffnen, wenn der Zustand, dass das Verdichter-Umgehungsventil (32) in einem offenen Zustand blockiert ist, erfasst wird.

3. Steuervorrichtung für die Brennkraftmaschine gemäß Anspruch 1 oder 2, weiterhin mit
einen Einlassdrucksensor (83), der konfiguriert ist, um einen Einlassdruck auf der Seite stromabwärts bezüglich des Verdichter-Umgehungsventils (32) zu erfassen, wobei
die elektronische Steuerungseinheit (10) konfiguriert ist, um i) einen Sollöffnungsgrad des Verdichter-Umgehungsventils (32) zu berechnen und ii) das Verdichter-Umgehungsventil (32) basierend auf dem Sollöffnungsgrad des Verdichter-Umgehungsventils (32) anzutreiben,
die elektronische Steuerungseinheit (10) konfiguriert ist, um i) einen Sollöffnungsgrad des Turbinen-Umgehungsventils (43) zu berechnen und ii) das Turbinen-Umgehungsventil (43) basierend auf dem Sollöffnungsgrad des Turbinen-Umgehungsventils (43) anzutreiben,
die elektronische Steuerungseinheit (10) konfiguriert ist, um den Sollöffnungsgrad des Verdichter-Umgehungsventils (32) zu berechnen, und
die elektronische Steuerungseinheit (10) konfiguriert ist, um zu erfassen, dass das Verdichter-Umgehungsventil (32) im geöffneten Zustand blockiert ist, basierend auf dem vom Einlassdrucksensor (83) erfassten Einlassdruck und dem Sollöffnungsgrad des Verdichter-Umgehungsventils (32).

4. Steuervorrichtung für die Brennkraftmaschine gemäß einem der Ansprüche 1 bis 3, weiterhin mit
einem Drehzahlsensor (82), der konfiguriert ist, um eine Drehzahl einer Abtriebswelle der Brennkraftmaschine (20) zu erfassen, wobei
die elektronische Steuerungseinheit (10) konfiguriert ist, um eine Kraftstoffeinspritzmenge basierend auf einem Betriebszustand der Brennkraftmaschine (20) zu berechnen, und die elektronische Steuerungseinheit (10) konfiguriert ist, um zu bestimmen, ob ein Defekt des Turbolader-Umgehungsventils erfassbar ist oder nicht, basierend auf der vom Drehzahlsensor (82) erfassten Drehzahl und der Kraftstoffeinspritzmenge.

5. Steuerungsverfahren zur Steuerung einer Brennkraftmaschine mit
einem ersten Turbolader (50) mit einem ersten Verdichter (51) und einer ersten Turbine (52),
einem zweiten Turbolader (60) mit einem zweiten Verdichter (61) und einer zweiten Turbine (62), wobei
der erste Verdichter (51) und der zweite Verdichter (61) in einer Einlasspassage (30) aufeinanderfolgend von einer Seite stromaufwärts in Strömungsrichtung von Einlassluft bereitgestellt sind,
die zweite Turbine (62) und die erste Turbine (52) in einer Auslasspassage (40) aufeinanderfolgend von der Seite stromaufwärts in Strömungsrichtung von Auslassluft bereitgestellt sind,
der erste Turbolader (50) und der zweite Turbolader (60) in Reihe angeordnet sind,
einer Verdichter-Umgehungspassage (31), die in der Einlasspassage (30) bereitgestellt ist, wobei die Verdichter-Umgehungspassage (31) konfiguriert ist, um Luft durch Umgehen des zweiten Verdichters (61) zu strömen,
einem Verdichter-Umgehungsventil (32), das in der Einlasspassage (30) bereitgestellt ist, wobei das Verdichter-Umgehungsventil (32) konfiguriert ist, um die Verdichter-Umgehungspassages (31) zu öffnen und zu schließen,
einer Turbinen-Umgehungspassage (42), die in der Auslasspassage (40) bereitgestellt ist, wobei die Turbinen-Umgehungspassage (42) konfiguriert ist, um die Auslassluft durch Umgehen der zweiten Turbine (62) zu strömen,
einem Turbinen-Umgehungsventil (43), das in der Auslasspassage (40) bereitgestellt ist, wobei das Turbinen-Umgehungsventil (43) konfiguriert ist, um die Turbinen-Umgehungspassage (42) zu öffnen und zu schließen,
einem Ladeluftkühler (71), der in der Einlasspassage (30) an einer Seite stromabwärts bezüglich des zweiten Verdichters (61) bereitgestellt ist, und
einer elektrischen Pumpe (72), die in einem Pfad für ein Kühlmittel bereitgestellt ist, das durch den Ladeluftkühler (71) zirkuliert, wobei die elektrische Pumpe (72) konfiguriert ist, um das Kühlmittel durch den Pfad zu zirkulieren,
das Steuerungsverfahren ist **gekennzeichnet durch**
i) Erfassen, dass das Verdichter-Umgehungsventil (32) im geöffneten Zustand blockiert ist, und
ii) Erhöhen eines Antriebswertes der elektrischen Pumpe (72), wenn ein Zustand, in dem das Verdichter-Umgehungsventil (32) im geöffneten Zustand blockiert ist, erfasst wird, als im Vergleich mit einem Antriebswert der elektrischen Pumpe (72), wenn der Zustand, dass das Verdichter-Umgehungsventil (32) im geöffneten Zustand blockiert ist, nicht erfasst wird, so dass eine Durchflussrate des durch den Ladeluftkühler (71) zirkulierenden Kühlmittels zunimmt.

## Revendications

1. Dispositif de commande pour commander un moteur à combustion interne qui inclut
un premier surcompresseur (50) qui inclut un premier compresseur (51) et une première turbine (52),
un second surcompresseur (60) qui inclut un second compresseur (61) et une seconde turbine (62),
le premier compresseur (51) et le second compresseur (61) étant prévus dans un passage d'admission (30) séquentiellement depuis un côté amont dans une direction de circulation d'un air d'admission,
la seconde turbine (62) et la première turbine (52) étant prévues dans un passage d'échappement (40) séquentiellement depuis le côté amont dans une direction de circulation d'un air d'échappement,
le premier surcompresseur (50) et le second surcompresseur (60) étant agencés en série,
un passage de contournement de compresseur (31) prévu dans le passage d'admission (30), le passage de contournement de compresseur (31) étant configuré pour faire circuler un air en contournant le second compresseur (61),
une soupape de contournement de compresseur (32) prévue dans le passage d'admission (30), la soupape de contournement de compresseur (32) étant configurée pour ouvrir et fermer le passage de contournement de compresseur (31),
un passage de contournement de turbine (42) prévu dans le passage d'échappement (40), le passage de contournement de turbine (42) étant configuré pour faire circuler l'air d'échappement en contournant la seconde turbine (62),
une soupape de contournement de turbine (43) prévue dans le passage d'échappement (40), la soupape de contournement de turbine (43) étant configurée pour ouvrir et fermer le passage de contournement de turbine (42),
un refroidisseur intermédiaire (71) prévu dans le passage d'admission (30) sur un côté aval par rapport au second compresseur (61), et
une pompe électrique (72) prévue dans un chemin pour un liquide de refroidissement qui circule à travers le refroidisseur intermédiaire (71), la pompe électrique (72) étant configurée pour faire circuler le liquide de refroidissement à travers le chemin,
le dispositif de commande **caractérisé par**
une unité de commande électronique (10) configurée pour
i) détecter que la soupape de contournement de compresseur (32) est bloquée dans un état ouvert, et
ii) augmenter une valeur d'entraînement de la pompe électrique (72) lorsqu'un état dans lequel la soupape de contournement de compresseur (32) est bloquée dans l'état ouvert est détecté par comparaison à une valeur d'entraînement de la pompe électrique (72) lorsque l'état dans lequel la soupape de contournement de compresseur (32) est bloquée dans l'état ouvert n'est pas détecté, de sorte qu'un débit du liquide de refroidissement qui circule à travers le refroidisseur intermédiaire (71) augmente.

2. Dispositif de commande pour le moteur à combustion interne selon la revendication 1, **caractérisé en ce que**
l'unité de commande électronique (10) est configurée pour ouvrir complètement la soupape de contournement de turbine (43) lorsque l'état dans lequel la soupape de contournement de compresseur (32) est bloquée dans un état ouvert est détecté.

3. Dispositif de commande pour le moteur à combustion interne selon la revendication 1 ou 2, comprenant en outre
un capteur de pression d'admission (83) configuré pour détecter une pression d'admission sur le côté aval par rapport à la soupape de contournement de compresseur (32), dans lequel
l'unité de commande électronique (10) est configurée pour i) calculer un degré d'ouverture cible de la soupape de contournement de compresseur (32) et ii) entraîner la soupape de contournement de compresseur (32) sur la base du degré d'ouverture cible de la soupape de contournement de compresseur (32),
l'unité de commande électronique (10) est configurée pour i) calculer un degré d'ouverture cible de la soupape de contournement de turbine (43) et ii) entraîner la soupape de contournement de turbine (43) sur la base du degré d'ouverture cible de la soupape de contournement de turbine (43),
l'unité de commande électronique (10) est configurée pour calculer le degré d'ouverture cible de la soupape de contournement de compresseur (32), et
l'unité de commande électronique (10) est configurée pour détecter que la soupape de contournement de compresseur (32) est bloquée dans l'état ouvert sur la base de la pression d'admission détectée par le capteur de pression d'admission (83) et du degré d'ouverture cible de la soupape de contournement de compresseur (32).

4. Dispositif de commande pour le moteur à combustion interne selon l'une quelconque des revendications 1 à 3, comprenant en outre
un capteur de vitesse de rotation (82) configuré pour détecter une vitesse de rotation d'un arbre secondaire du moteur à combustion interne (20), dans lequel
l'unité de commande électronique (10) est configurée pour calculer une quantité d'injection de carburant sur la base d'un état de fonctionnement du moteur à combustion interne (20), et l'unité de commande électronique (10) est configurée pour déterminer si oui ou non une déficience de la soupape de contournement de compresseur peut être détectée sur la base de la vitesse de rotation détectée par le capteur de vitesse de rotation (82) et de la quantité d'injection de carburant.

5. Procédé de commande pour commander un moteur à combustion interne qui inclut
un premier surcompresseur (50) qui inclut un premier compresseur (51) et une première turbine (52),
un second surcompresseur (60) qui inclut un second compresseur (61) et une seconde turbine (62),
le premier compresseur (51) et le second compresseur (61) étant prévus dans un passage d'admission (30) séquentiellement depuis un côté amont dans une direction de circulation d'un air d'admission,
la seconde turbine (62) et la première turbine (52) étant prévues dans un passage d'échappement (40) séquentiellement depuis le côté amont dans une direction de circulation d'un air d'échappement,
le premier surcompresseur (50) et le second surcompresseur (60) étant agencés en série,
un passage de contournement de compresseur (31) prévu dans le passage d'admission (30), le passage de contournement de compresseur (31) étant configuré pour faire circuler un air en contournant le second compresseur (61),
une soupape de contournement de compresseur (32) prévue dans le passage d'admission (30), la soupape de contournement de compresseur (32) étant configurée pour ouvrir et fermer le passage de contournement de compresseur (31),
un passage de contournement de turbine (42) prévu dans le passage d'échappement (40), le passage de contournement de turbine (42) étant configuré pour faire circuler l'air d'échappement en contournant la seconde turbine (62),
une soupape de contournement de turbine (43) prévue dans le passage d'échappement (40), la soupape de contournement de turbine (43) étant configurée pour ouvrir et fermer le passage de contournement de turbine (42),
un refroidisseur intermédiaire (71) prévu dans le passage d'admission (30) sur un côté aval par rapport au second compresseur (61), et
une pompe électrique (72) prévue dans un chemin pour un liquide de refroidissement qui circule à travers le refroidisseur intermédiaire (71), la pompe électrique (72) étant configurée pour faire circuler le liquide de refroidissement à travers le chemin,
le procédé de commande **caractérisé par**
i) le fait de détecter que la soupape de contournement de compresseur (32) est bloquée dans un état ouvert, et
ii) l'augmentation d'une valeur d'entraînement de la pompe électrique (72) lorsqu'un état dans lequel la soupape de contournement de compresseur (32) est bloquée dans l'état ouvert est détecté par comparaison à une valeur d'entraînement de la pompe électrique (72) lorsque l'état dans lequel la soupape de contournement de compresseur (32) est bloquée dans l'état ouvert n'est pas détecté, de sorte qu'un débit du liquide de refroidissement qui circule à travers le refroidisseur intermédiaire (71) augmente.
